# EUROPEAN PATENT APPLICATION

(11) **EP 4 629 741 A1**
(43) Date of publication of application: **08.10.2025**
(21) Application number: 23914970.1
(22) Date of filing: 14.12.2023
(51) Int. Cl.: H04W 76/12, H04W 76/11, H04W 48/18, H04L 41/0894, H04W 8/22, H04W 88/14

(54) **METHOD AND DEVICE FOR SUPPORTING ESTABLISHMENT OF PDU SESSION ON NETWORK SLICE IN COMMUNICATION NETWORK**

(30) Priority: 04.01.2023 KR 20230001414; 27.09.2023 KR 20230130686
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2023/020640
(87) International publication number: WO 2024/147508

(57) **Abstract**

The present invention relates to a 5G or 6G communication system for supporting higher data transmission rates. Provided is a method for supporting a session management function (SMF) of a communication network in the establishment of a protocol data unit (PDU) session on a network slice, the method comprising the steps of: receiving a PDU session request message, including a first network slice identifier and an additional network slice identifier, from an access and mobility management function (AMF), wherein the additional network slice identifier is replaced by the first network slice identifier; selecting a policy control function (PCF) for the first network slice identifier; transmitting, to the selected PCF, a policy creation request message including the first network slice identifier and the additional network slice identifier; and receiving, from the PCF, a message in response to the policy creation request message.

## Description

### [Technical Field]

The disclosure relates to a method and a device for supporting the establishment of a PDU session of a network slice in a communication network. More specifically, the disclosure relates to a method and a device for determining a session policy when a network slice change occurs.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

When a new PDU session is established to replace a PDU session that needs to be changed (i.e., an existing PDU session), the existing PDU session for data transmission and the like is replaced by the new PDU session. In determining a policy for the new PDU session, a session-related policy or remaining data allowance determined for the existing PDU session (i.e., a PDU session existing in the network slice where the problem has occurred) may be considered. The disclosure proposes a method and a device for supporting the establishment of a PDU session for a new network slice.

### [Technical Solution]

The disclosure proposes a method that, when determining a policy for a new PDU session that replaces an existing PDU session for a network slice change, allows for consideration of the session-related policy and the remaining data allowance determined for the existing PDU session.

The disclosure proposes a method for supporting establishment of a protocol data unit (PDU) session of a network slice by a session management function (SMF) in a communication network, the method including receiving, from an access and mobility management function (AMF), a PDU session request message including a first network slice identifier and an additional network slice identifier, wherein the additional network slice identifier is an identifier of a network slice which is replaced by the first network slice identifier, selecting a policy control function (PCF) for the first network slice identifier, transmitting, to the selected PCF, a policy creation request message including the first network slice identifier and the additional network slice identifier, and receiving, from the PCF, a response message to the policy creation request message.

The disclosure proposes a method for supporting establishment of a protocol data unit (PDU) session of a network slice by a policy control function (PCF) in a communication network, the method including receiving, from a session management function (SMF), a policy creation request message including a first network slice identifier and an additional network slice identifier, wherein the additional network slice identifier is an identifier of a network slice which is replaced by the first network slice identifier, transmitting, to a binding support function (BSF) or a unified data repository (UDR), an identification message requesting PCF information corresponding to the additional network slice identifier, receiving a first response message to the identification message, and, transmitting, to the SMF, a second response message to the policy creation request message based on the first response message.

The disclosure proposes a session management function (SMF) entity supporting establishment of a protocol data unit (PDU) session of a network slice in a communication network, the entity including a transceiver configured to receive, from an access and mobility management function (AMF), a PDU session request message including a first network slice identifier and an additional network slice identifier, wherein the additional network slice identifier is an identifier of a network slice which is replaced by the first network slice identifier, and a processor configured to select a policy control function (PCF) for the first network slice identifier, wherein the processor is configured to control the transceiver to transmit, to the selected PCF, a policy creation request message including the first network slice identifier and the additional network slice identifier, and receive, from the PCF, a response message to the policy creation request message.

The disclosure proposes a policy control function (PCF) entity supporting establishment of a protocol data unit (PDU) session of a network slice in a communication network, the entity including a transceiver, and a processor configured to, through the transceiver, receive, from a session management function (SMF), a policy creation request message including a first network slice identifier and an additional network slice identifier, wherein the additional network slice identifier is an identifier of a network slice which is replaced by the first network slice identifier, transmit, to a binding support function (BSF) or a unified data repository (UDR), an identification message requesting PCF information corresponding to the additional network slice identifier, receive a first response message to the identification message, and, transmit, to the SMF, a second response message to the policy creation request message based on the first response message.

### [Advantageous Effects]

A policy control function (PCF) selected for an existing PDU session can be selected to determine a policy for a new PDU session that replaces the existing PDU session for a network slice change, so that the session-related policy determined for the existing PDU session can be used. As a result, the overhead of performing a new session-related policy decision can be reduced, and the problem of service continuity not being guaranteed due to policy changes can be avoided.

In addition, in a procedure of establishing a new PDU session to change an existing network slice (old S-NSSAI) to a new network slice, information about the existing network slice and the new network slice (alternative S-NSSAI) that replaces the existing network slice is reported to the PCF, so that when the PCF performs the data usage update of the new PDU session or a policy determination considering the remaining data usage, the PCF is allowed to update the network slice identifier (S-NSSAI) and the remaining data usage stored for a data network name (DNN) for the existing PDU session, and to consider the S-NSSAI and the remaining data usage for the DNN for the existing PDU session. Accordingly, incorrect remaining data usage management or incorrect policy determination for a new PDU session can be avoided.

### [Brief Description of Drawings]

FIG. 1 illustrates entities and reference points included in a 5G system architecture.
FIG. 2 illustrates a method of selecting the same PCF and a method of determining a policy, based on a binding support function (BSF) or UDR according to the disclosure.
FIG. 3 illustrates a method of selecting the same PCF and a method of determining a policy, based on UDM according to the disclosure.
FIG. 4 illustrates a method for supporting the establishment of a PDU session of a network slice by an SMF in a communication network according to the disclosure.
FIG. 5 illustrates a method for supporting the establishment of a PDU session of a network slice by a PCF in a communication network according to the disclosure.
FIG. 6 illustrates a device configuration of a network entity according to the disclosure.
FIG. 7 illustrates a device configuration of a UE according to the disclosure.

### [Mode for Carrying out the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

In the accompanying drawings, some elements may be exaggerated, omitted, or schematically illustrated. Also, the size of each element does not completely reflect the actual size. In the respective drawings, the same or corresponding elements are assigned the same reference numerals.

In the following description, a base station is an entity that allocates resources to terminals, and may be at least one of a gNode B, an eNode B, a Node B (or xNode B (where, x is an alphabet including one of g and e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally y, a "sidelink (SL)" may exist, which refers to a radio link via which a UE transmits a signal to another UE.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

Furthermore, in the following description, LTE, LTE-A, or 5G systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may be applied to other communication systems through some modifications without significantly departing from the scope of the disclosure.

A 5G mobile communication network includes a 5G user equipment (UE), a 5G radio access network (RAN), and a 5G core network. The 5G core network includes at least one network functions (NFs), such as the access and mobility management function (AMF) that provides a mobility management function of the UE, the session management function (SMF) that provides a session management function, the user plane function (UPF) that performs a data transfer role, a policy control function (PCF) that provides a policy control function, a unified data management (UDM) that provides data management functions, such as for subscriber data and policy control data, and a unified data repository (UDR) that stores data of various network functions such as UDM.

In a 5G system, network slicing refers to a technology or structure that enables several virtualized, independent, logical networks in one physical network. A network operator configures a virtual end-to-end network called a network slice and provides service to meet specified requirements for the service/application. The network slice is identified by an identifier called single-network slice selection assistance information (S-NSSAI), and the network operator provides the network slice(s) to the UE to receive a service.

Specifically, in the 5G system, when the UE registers in the network, the UE transmits identifier information (i.e., requested S-NSSAIs) about the network slices to be requested to the AMF, and the AMF provides information (allowed NSSAI) about the network slices usable by the UE to the UE by considering the requested S-NSSAIs and subscriber information. Even if the UE does not provide the AMF with the information about the network slices requested by the UE, the AMF may provide the UE with the allowed NSSAI. In this case, the allowed NSSAI may include information about the slices configured as default (i.e., default subscribed S-NSSAIs) among information about default configuration slices (default configured NSSAI) and subscription slice(s) included in the UE subscriber information.

When no slice may be included in the allowed NSSAI (e.g., when the default configured NSSAI and default subscribed S-NSSAIs are absent or unavailable), the AMF may transmit, to the UE, a network registration reject message including the cause code indicating that registration is rejected due to lack of an available slice.

Meanwhile, when the AMF is to include a predetermined slice in the allowed NSSAI of the UE, an admission control (network slice admission control (NSAC)) procedure and an authentication (network slice-specific authentication and authorization (NSSAA)) procedure may be performed for the corresponding network slice.

In the NSAC procedure, whether to allow the network slice may be determined based on the number of UEs currently registered in a particular slice and the maximum number of registered UEs allowed in the corresponding slice (i.e., whether to include the network slice in the allowed NSSAI). Specifically, a network slice admission control function (NSACF) monitors the number of registered UEs and the number of established protocol data unit (PDU) sessions for each network slice subject to NSAC, and may perform control to ensure that the number of registered UEs and the number of established PDU sessions for each network slice are less than the maximum number of registered UEs and the maximum number of PDU sessions, respectively. At this time, when a new UE is registered in the network slice subject to NSAC or when an existing registered UE is deregistered, the AMF may transmit, to the NSACF, an update request message notifying of the same. When a new PDU session is established or an existing PDU session is released in the network slice subject to NSAC, the SMF may transmit, to the NSACF, an update request message notifying of the same. When the NSACF receives a message notifying of the registration of a new UE in a network slice or the establishment of a new PDU session, it may determine whether to allow the corresponding network slice based on the maximum number of UEs and the maximum number of PDU sessions, and then include the determination of whether to allow the network slice in each response message.

Meanwhile, in order to transmit/receive data to/from a specific data network (DN) through allowed network slices (allowed NSSAIs), the UE may select one of the allowed network slices, request to establish a packet data unit (PDU) session to a specific data network name (DNN) in the corresponding slice, and transmit/receive data through the established PDU session. The PDU session may include one or several traffic flows, and the traffic flows may include a type of guaranteed bitrate quality-of-service flow (GBR QoS flow) or non-GBR QoS flow.

There may be cases where one or all of protocol data unit (PDU) sessions included in a predetermined network slice should be moved to another network slice. Such cases include an example in which congestion occurs among various 5G network entities belonging to a network slice or the use of a particular slice should be temporarily or permanently suspended for operational reasons (e.g., equipment replacement, upgrade, etc.), or in which the performance of a network slice transmitting application traffic degrades and thus the traffic needs to be moved to another network.

In this case, the network slice of a PDU session that needs to be changed should be changed to an alternative network slice. When a new PDU session is established to replace a PDU session that needs to be changed (i.e., an existing PDU session), the new PDU session is a PDU session to replace data transmission and the like through the existing PDU session. When determining a policy for a new PDU session, a session-related policy or remaining data allowance determined for the existing PDU session (i.e., the PDU session existing in the network slice in which the problem has occurred) may be considered. The disclosure proposes a method and a device for supporting policy determination for a new PDU session.

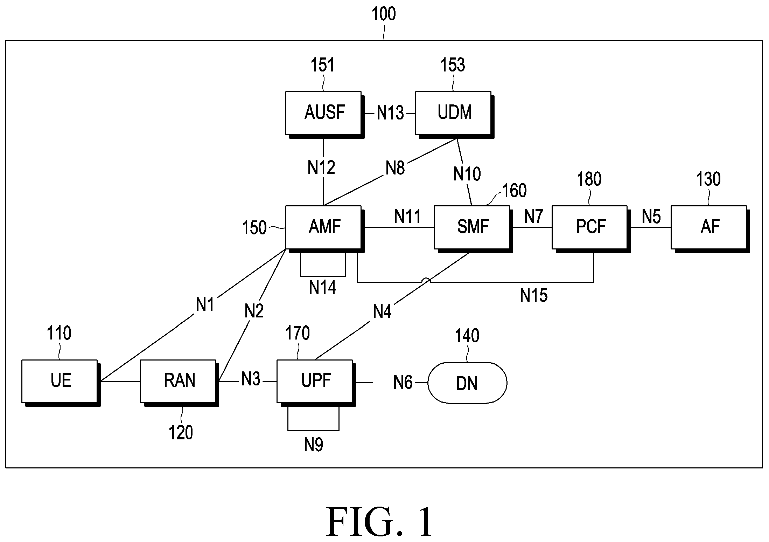

FIG. 1 illustrates entities and reference points included in the 5G system architecture.

In 3GPP, conceptual links connecting NFs in the 5G system are defined as reference points. In the following, examples of reference points included in the 5G system architecture described in FIG. 1 are provided below.
- N1: a reference point between a UE 110 and an AMF 150
- N2: a reference point between an (R)AN 120 and an AMF 150
- N3: a reference point between an (R)AN 120 and a UPF 170
- N4: a reference point between an SMF 160 and a UPF 170
- N5: a reference point between a PCF 190 and an application function (AF) 130
- N6: a reference point between a UPF 180 and a DN 140
- N7: a reference point between an SMF 160 and a PCF 180
- N8: a reference point between a UDM 153 and an AMF 150
- N9: a reference point between two core UPFs 170
- N10: a reference point between a UDM 153 and an SMF 160
- N11: a reference point between an AMF 150 and an SMF 160
- N12: a reference point between an AMF 150 and an authentication server function (AUSF) 151
- N13: a reference point between a UDM 153 and an AUSF 151
- N14: a reference point between two AMFs 150
- N15: a reference point between a PCF 180 and an AMF 150 for a non-roaming scenario, and a reference point between a PCF 180 in a visited network and an AMF 150 for a roaming scenario

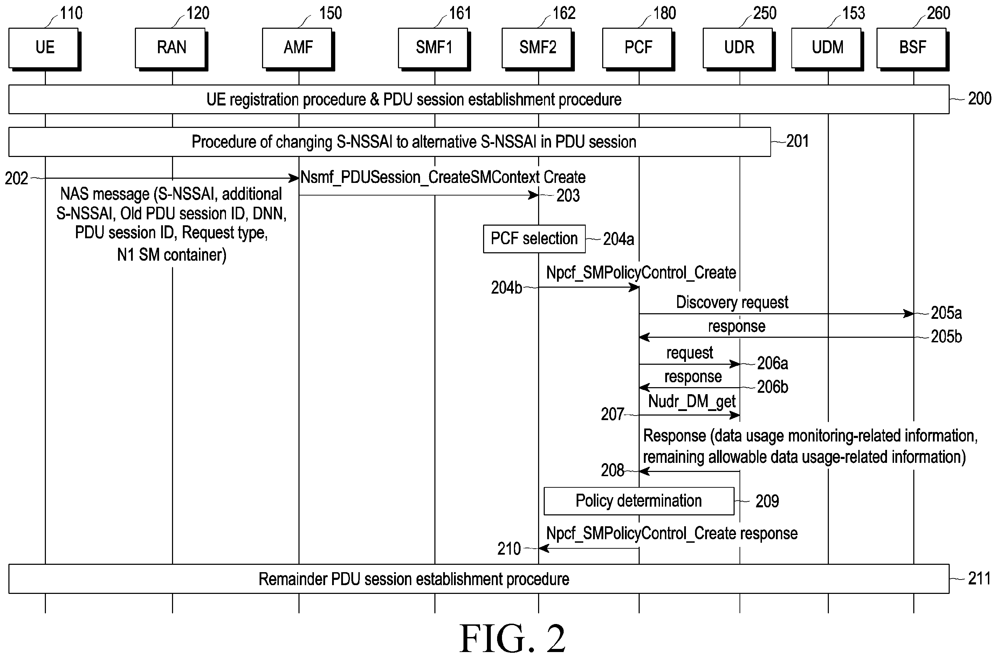

FIG. 2 illustrates a method of selecting the same PCF and determining a policy, based on a binding support function (BSF) or UDR.

In operation 200, the UE 110 may perform a registration procedure. Here, the AMF 150 may receive subscription information for the UE 10 from the UDM 153, and the subscription information may include "UE Context in SMF Data". The UE Context in SMF Data may include at least one of an S-NSSAI, a DNN, and an identifier (i.e., PCF ID) of a session management (SM) PCF with respect to an identifier (i.e., PDU session ID) of an already established PDU session. Even after the registration procedure, when a change occurs in the UE Context in SMF Data (e.g., when a PCF ID is generated or changed), the UDM 153 may notify the AMF 150 of the UE Context in SMF Data. The UE 110 may perform a PDU session establishment procedure after the registration procedure.

In the PDU session establishment procedure, the AMF 150 may select an SMF (i.e., SMF1 161), based on the S-NSSAI (e.g., old S-NSSAI) and DNN received from the UE 110, and transmit an SM context creation (Context Create) message to the SMF1 161.

The SMF1 161 may select a PCF for the corresponding PDU session. In the PDU session establishment procedure, when the PCF ID is received from the AMF 150, the SMF1 161 may select a PCF corresponding to the received PCF ID and transmit an SM policy creation request message to the selected PCF.

When the PCF serves a new PDU session (i.e., when the PCF is selected), the PCF may transmit PDU session information to be served by the PCF itself, that is, a subscription permanent identifier (SUPI), a PDU session ID, a DNN, an S-NSSAI, and identifier information of the PCF itself (i.e., PCF ID) to the binding support function (BSF) 260 and store the PDU session information therein. Here, the PCF may include the PCF ID and one or more pieces of information among the SUPI, the PDU session ID, the DNN, and the S-NSSAI in the message transmitted to the BSF 260.

Alternatively, if the BSF does not exist in the network, when the PCF serves a new PDU session (i.e., when the PCF is selected), the PCF may transmit the PDU session information to be served by the PCF itself, i.e., the SUPI, PDU session ID, DNN, S-NSSAI, and identifier information of the PCF itself (i.e., the PCF ID)) to the UDR 250 and store the PDU session information therein. Here, the PCF may include the PCF ID and one or more pieces of information among the SUPI, the PDU session ID, the DNN, and the S-NSSAI in the message transmitted to the UDR 250.

In operation 201, the AMF 150 may determine to change PDU sessions established for an existing network slice (e.g., old S-NSSAI) to a new network slice (i.e., alternative S-NSSAI), based on local configuration or information received from other NFs, and may include, in the message transmitted to the UE 110, information indicating that the alternative S-NSSAI is a network slice identifier that replaces the old S-NSSAI, and the allowed network slice information (i.e., Allowed NSSAI) containing the alternative S-NSSAI.

In addition, for each PDU session established for the old S-NSSAI, the AMF 150 may transmit a message indicating that a network slice of the corresponding PDU session should be changed by the alternative S-NSSAI to the SMF 161. When it is determined not to maintain the PDU session, the SMF 161 may transmit, based on the information received from the AMF 150, information indicating to transmit a new PDU session establishment request containing the alternative S-NSSAI and DNN (i.e., DNN of the existing PDU session) to the UE 110.

Alternatively, when it is determined to maintain the PDU session, the SMF 161 may transmit, to the UE 110, information indicating to change the S-NSSAI of the existing PDU session to the alternative S-NSSAI, and transmit an SM Policy Association Modification message to the PCF 180. The SM Policy Association Modification message may include the S-NSSAI and alternative S-NSSAI. In this case, operation 209 may be performed after the SMF 161 has transmitted the SM Policy Association Modification message to the PCF 180 in operation 201.

Based on the information that has been received from the SMF 161 in operation 201, the UE 110 may transmit a NAS message for a PDU session establishment request to the AMF 150 through the RAN 120 in operation 202.

The NAS message may include at least one of the following pieces of information:
- S-NSSAI: Alternative S-NSSAI information received from the SMF 161 in operation 201
- Additional S-NSSAI: Network slice identifier information (i.e., old S-NSSAI) replaced by the S-NSSAI (i.e., alternative S-NSSAI)
- Old PDU session ID: PDU session ID included in the information that has been received from the SMF 161 in operation 201, and this is information capable of identifying a PDU session established in the old S-NSSAI.
- DNN: Name information for a data network (DN)
- PDU session ID: PDU session identifier established by the UE 110
- Request type: Type of PDU session establishment request
- N1 SM container: Information transmitted to the SMF, and PDU Session Establishment Request message may be included therein.

The NAS message may include a PDU session ID, Requested PDU Session Type, a Requested session and service continuity (SSC) mode, 5GSM capability, etc.

Based on the S-NSSAI (i.e., alternative S-NSSAI) and DNN included in the information that has been received in operation 202, the AMF 150 may select the SMF 162 in operation 203.

The AMF 150 may know the previous S-NSSAI information (i.e., old S-NSSAI) that has been replaced by the S-NSSAI (i.e., alternative S-NSSAI) included in the information that has been received in operation 202.

Specifically, in case that the AMF 150 has transmitted, to the UE 110 in operation 201, information indicating that the alternative S-NSSAI is a network slice identifier that replaces the old S-NSSAI and has received, from the UE 110 in operation 202, the same S-NSSAI as the alternative S-NSSAI that replaces the old S-NSSAI and has been transmitted to the UE 110 in operation 201, the AMF 150 may know that the old S-NSSAI corresponds to a network slice having been replaced by another network slice.

Alternatively, when the message transmitted by the UE 110 in operation 202 includes additional S-NSSAI or old PDU session ID, the AMF 150 may identify the old S-NSSAI, based on the message. When the message transmitted by the UE 110 in operation 202 includes the old PDU session ID, the AMF may determine the S-NSSAI for the old PDU session ID, as the old S-NSSAI.

The AMF 150 may include at least one of the following pieces of information in the message 203 transmitted to the SMF 162:
- SUPI: UE identifier information
- DNN: DNN included in the message that has been received in operation 202. When the AMF 150 receives a new DNN from the access and mobility management (AM) PCF, the corresponding DNN may be included.
- S-NSSAI: S-NSSAI included in the message that has been received in operation 202.
- Additional S-NSSAI: When the AMF 150 determines that the S-NSSAI included in the information that has been received in operation 202 is a network slice identifier that replaces the old S-NSSAI, the AMF 150 may include, in the message transmitted to the SMF 162, the additional S-NSSAI (i.e., network slice identifier information replaced by the S-NSSAI) along with the S-NSSAI (i.e., alternative S-NSSAI) received in operation 202.
- PDU session ID: PDU session ID included in the message received in operation 202
- Old PDU session ID: old PDU session ID included in the message received in operation 202
- AMF ID: AMF identifier
- Request Type, N1 SM container (PDU Session Establishment Request): Request Type and N1 SM Container included in the message that has been received in operation 202
- PCF ID, Same PCF Selection Indication: When the AMF 150 determines, based on the information (e.g., Additional S-NSSAI) that has been received in operation 202, that the S-NSSAI included in the message that has been received in operation 202 is a network slice identifier that replaces the old S-NSSAI, the AMF 150 may identify whether the UE Context in SMF Data that has been received from the UDM 153 in operation 200 contains the old PDU session ID, the additional S-NSSAI, and the PCF ID corresponding to the DNN, which are included in the message received in operation 202. In case that the UE Context in SMF Data that has been received from the UDM 153 in operation 200 contains the old PDU session ID, the additional S-NSSAI, and the PCF ID corresponding to the DNN, which are received in operation 202, the AMF 150 may include one or more of the corresponding PCF ID and the Same PCF Selection Indication in the message 203 transmitted to the SMF 162. The Same PCF Selection Indication may be included as information indicating selection of the PCF corresponding to the PCF ID.

When the message received in operation 203 includes the additional S-NSSAI along with the S-NSSAI, or includes the old PDU session ID, in operation 204a, the SMF 162 may, based on this, identify the identifier information (i.e., old S-NSSAI) of the network slice that is replaced by the S-NSSAI included in the message that has been received in operation 203.

The SMF 162 may perform PCF selection. When the PCF ID is received in operation 203, the SMF 162 selects the PCF corresponding to the PCF ID. Otherwise, the SMF 162 may select the PCF by considering the SUPI, DNN, or S-NSSAI.

In operation 204b, the SMF 162 may transmit a message requesting SM policy creation to the selected PCF 180. The message may contain one or more of the following pieces of information:
- SUPI: UE identifier information
- DNN: DNN received in operation 203
- PDU session ID: PDU session ID received in operation 203
- Old PDU session ID: old PDU session ID received in operation 203
- S-NSSAI: S-NSSAI received in operation 203
- Additional S-NSSAI: This indicates the identifier information of the network slice being replaced by the S-NSSAI, and may be the additional S-NSSAI received in operation 203.

In case that the BSF is available, in operation 205a, the PCF 180 may transmit, to the BSF 260, a message (e.g., a Discovery Request message) for identifying whether there is a pre-selected PCF for the SUPI, DNN, and additional S-NSSAI which are included in the message that has been received in operation 204b, or for the SUPI, the DNN, the additional S-NSSAI, and the old PDU session ID. The message transmitted to the BSF 260 by the PCF 180 may include one or more of the SUPI, DNN, additional S-NSSAI, and old PDU session ID, and each information included in the message may be the same as the information that has been received in operation 204b.

When the address of the PCF corresponding to the information received in operation 205a is stored in the BSF 260, the BSF 260 may include a PCF instance ID or PCF Set ID along with the address for the corresponding PCF (PCF addresses) in a response message transmitted to the PCF 180, in operation 205b.

When the address of the PCF corresponding to the information that has been received in operation 205a is not stored in the BSF 260, the BSF may not include the PCF address in the response message 205b transmitted to the PCF 180.

When the PCF address information is included in the message, which has been received by the PCF 180 from the BSF 260 in operation 205b, operations 207 to 209 may be omitted and operation 210 may be performed.

When the PCF address information is not included in the message, which has been received by the PCF 180 from the BSF 260 in operation 205b, operation 207 may be performed.

When the BSF is not available, in operation 206a, the PCF 180 may transmit, to the UDR 250, a message for identifying whether there is a pre-selected PCF for the SUPI, DNN, and additional S-NSSAI which are included in the message that has been received in operation 204b, or for the SUPI, DNN, additional S-NSSAI, and old PDU session ID. The message transmitted by the PCF 180 to the UDR 250 may include one or more of the SUPI, DNN, additional S-NSSAI, and old PDU session ID, and each information included in the message may be the same as the information that has been received in operation 204b.

When the PCF information corresponding to the information that has been received in operation 206a is not stored in the UDR 250, the UDR 250 may not include the PCF address in a response message transmitted to the PCF 180 in operation 206b.

When the PCF address is included in the message that has been received by the PCF 180 from the UDR 250 in operation 206b, operations 207 to 209 may be omitted and operation 210 may be performed.

When the PCF address is not included in the message that has been received by the PCF 180 from the UDR 250 in operation 206b, operation 207 may be performed.

In operation 207, the PCF 180 may request, from the UDR 250, the additional S-NSSAI and DNN that has been received in operation 204b and/or policy information for the S-NSSAI and DNN. That is, the PCF 180 may request either policy information for an existing network slice or policy information for a new network slice, or may request both.

The message 207 transmitted by the PCF 180 to the UDR 250 may include the SUPI, the DNN, the S-NSSAI, and/or the SUPI, the DNN, and the additional S-NSSAI.

In operation 208, the UDR 250 may include, in the response message transmitted to the PCF 180, at least one of the data usage monitoring-related information and the remaining allowable data usage-related information for the SUPI, DNN, and S-NSSAI (or SUPI, DNN, and additional S-NSSAI) contained in the information that has been received in operation 207.

In operation 209, the PCF 180 may determine a policy (e.g., policy and charging control (PCC) rule, etc.) for a PDU session. Here, the PCF 180 may utilize policy information determined for the additional S-NSSAI and DNN or for the additional S-NSSAI, DNN, and old PDU session ID, based on the information that has been received in operation 204b.

When the PCF 180 receives an SM Policy Association Create message from the SMF 161, if the S-NSSAI (e.g., alternative S-NSSAI) and the additional S-NSSAI (e.g., old S-NSSAI) are included in the SM Policy Association Create message, the PCF 180 may associate the SM policy with the S-NSSAI (e.g., alternative S-NSSAI) included in the received message, and additionally associate the SM policy with the additional S-NSSAI (e.g., old S-NSSAI) included in the received message. For example, when the SM Policy Association Create message is received, the PCF 180 may generate an SM Policy Association ID, and then store the default S-NSSAI for the ID as the S-NSSAI (e.g., alternative S-NSSAI) received from the SMF 161 and store the additional S-NSSAI for the ID as the additional S-NSSAI (e.g., old S-NSSAI).

Alternatively, when the SM Policy Association Modification message received from the SMF in operation 201 includes the SM Policy Association ID, the S-NSSAI (e.g., alternative S-NSSAI), and the additional S-NSSAI (e.g., old S-NSSAI), the PCF 180 may associate the SM policy stored for the SM Policy Association ID included in the received message with the S-NSSAI (e.g., alternative S-NSSAI) included in the received message, and additionally associate the stored SM policy with the additional S-NSSAI (e.g., old S-NSSAI) included in the received message. For example, upon receiving an SM Policy Association Update message, the PCF 180 may store the default S-NSSAI for the SM Policy Association ID included in the received message as the S-NSSAI (e.g., alternative S-NSSAI) received from the SMF, and store the additional S-NSSAI for the corresponding ID as the additional S-NSSAI (e.g., old S-NSSAI).

The PCF 180 further stores the additional S-NSSAI (e.g., old S-NSSAI) for the SM policy (or PDU session) through the above processes, and thus when a request message including the old S-NSSAI is received, the PCF 180 may process the corresponding SM policy (or PDU session).

Although not shown, when the PCF 180 receives the SM Policy Create message including the S-NSSAI (e.g., alternative S-NSSAI) and the additional S-NSSAI (e.g., old S-NSSAI), the PCF 180 may transmit a registration message (e.g., Nbsf_Management_Register message) for a PDU session to the BSF 260.

The registration message for the PDU session may include at least one of the following pieces of information:
- SUPI: Internal identifier information of a UE
- UE addresses: Address information of a UE
- Generic public subscription identifier (GPSI): External identifier information (e.g., phone number) of a UE
- PCF Address: Address of a PCF
- S-NSSAI: it may include the S-NSSAI (e.g., alternative S-NSSAI) included in the message received from the SMF.
- Additional S-NSSAI: it may include additional S-NSSAI (e.g., old S-NSSAI) included in the message received from the SMF.
- Data network name (DNN): it may include the identifier information of a data network (e.g., may be in the form of a domain name).

Alternatively, although not shown, when the PCF 180 receives an SM Policy Association Modification message including the S-NSSAI (e.g., alternative S-NSSAI) and the additional S-NSSAI (e.g., old S-NSSAI), the PCF 180 may transmit an update message (e.g., Nbsf_Management_Update message) for a PDU session to the BSF 260.

The update message for the PDU session may include one or more of the following pieces of information:
- SUPI: Internal identifier information of a UE
- UE addresses: Address information of a UE
- GPSI: External identifier information (e.g., phone number) of a UE
- PCF Address: Address of a PCF
- S-NSSAI: it may include the S-NSSAI (e.g., alternative S-NSSAI) included in the message received from the SMF.
- Additional S-NSSAI: it may include additional S-NSSAI (e.g., old S-NSSAI) included in the message received from the SMF.
- Data network name (DNN): it may include identifier information of a data network (e.g., may be in the form of a domain name).

Although not shown, when the BSF 260 receives the Nbsf_Management_Register or Nbsf_Management_Update message from the PCF 180, the BSF 260 may store the PCF address included in the corresponding message as the PCF address for the SUPI, UE addresses, GSPI, and S-NSSAI (e.g., alternative S-NSSAI) and additional S-NSSAI (e.g., old S-NSSAI) included in the message received from the PCF 180. By additionally storing the additional S-NSSAI (e.g., old S-NSSAI) in the PCF address information serving a PDU session through the above process, the BSF 260 may include the stored PCF address information in a response message and transmit it when receiving a PCF discovery request message including the old S-NSSAI (i.e., when receiving a PCF address request message including the previous S-NSSAI of a PDU session).

The PCF 180 may also determine a monitoring-related policy for the PDU session. Here, the PCF 180 may use the information received in operation 208 to determine the monitoring-related policy.

In case that the PCF information (i.e., PCF addresses, PCF instance ID, or PCF set ID) is included in the information that has been received from the BSF 260 in operation 205b or the information that has been received from the UDR 250 in operation 206b, the PCF 180 may include, in the message transmitted to the SMF 162, information indicating redirection along with the corresponding PCF information in operation 210.

When the information received in operation 210 includes PCF information to be redirected, the SMF 162 may select the corresponding PCF and perform the procedure again from operation 204b.

When the PCF 180 has determined the policy for the PDU session in operation 209, the PCF 180 may include the determined policy, i.e., PCC rule, monitoring-related policy information, policy control request (PCR) trigger information, etc., in the message 210 transmitted to the SMF 162.

In operation 211, the remaining PDU session establishment procedures may be performed. Examples of the remaining procedures may include user plane (UP) resource configuration, resource configuration result notification, or data communication through the configured UP resource.

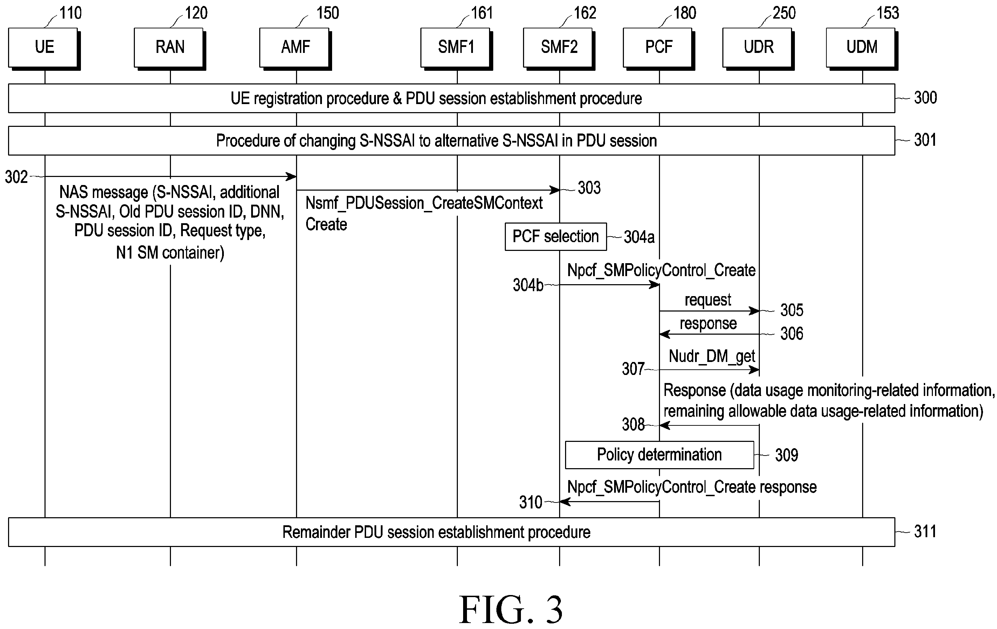

FIG. 3 illustrates a method of selecting the same PCF and a method of determining a policy, based on UDM.

In operation 300, the UE 110 may perform a registration procedure. Here, the AMF 150 may receive subscription information for the UE 110 from the UDM 153, and the subscription information may include PCF selection assistance information (Selection Assistance Info) and "UE context in SMF data". The PCF Selection Assistance Info includes combinations of DNN and S-NSSAI, and for each combination included, it may include information indicating that the PCF for the AM policy (i.e., AM PCF) of the UE should be selected to be the same as the PCF for the SM policy of a PDU session. The UE Context in SMF Data may include a SUPI (i.e., UE identifier), a S-NSSAI, a DNN, and an identifier (i.e., PCF ID) of an SM PCF with respect to an identifier (i.e., PDU session ID) of an already established PDU session. Even after the registration procedure, when a change occurs in the UE Context in SMF Data (e.g., when the PCF ID is generated or changed), the UDM 153 may notify the AMF 150 of the UE Context in SMF Data.

The UE 110 may perform a PDU session establishment procedure after the registration procedure.

In the PDU session establishment procedure, the AMF 150 may select an SMF (i.e., SMF1 161), based on the S-NSSAI (e.g., old S-NSSAI) and DNN received from the UE, and transmit an SM Context Create message to the SMF1 161.

The SMF1 161 may select a PCF for the corresponding PDU session. In the PDU session establishment procedure, when the PCF ID is received from the AMF 150, the SMF1 161 may select a PCF corresponding to the corresponding PCF ID and transmit an SM policy creation request message to the selected PCF.

The SMF1 161 may store the PCF ID determined for the SUPI, PDU session ID, DNN, and S-NSSAI in the UE Context in SMF Data of the UDM 153. For example, when the SMF1 161 supports the network slice change function, the SMF1 161 may store the PCF ID determined for the SUPI, PDU session ID, DNN, and S-NSSAI in the UE Context in SMF Data of the UDM 153.

At this time, the SMF1 161 may include one or more pieces of information among the SUPI, PDU session ID, DNN, and S-NSSAI, PCF ID (or PCF address), PCF instance ID, or PCF Set ID in the message transmitted to the UDM 153. The UDM 153 may store the PCF ID (or PCF address) for the SUPI, PDU session ID, DNN, and S-NSSAI in the UE Context in SMF Data, based on the information included in the message received from the SMF1 161. The UDM 153 may store the UE Context in SMF Data in the UDR 250. For example, when a change occurs in the UE Context in SMF Data of the UDM 153, the UDM 153 may reflect the change in the UE Context in SMF Data stored in the UDR 250.

In operation 301, the AMF 150 may determine to change PDU sessions established for an existing network slice (e.g., old S-NSSAI) to a new network slice (i.e., alternative S-NSSAI), based on local configuration or information received from other NFs, and may include, in the message transmitted to the UE 110, information indicating that the alternative S-NSSAI is a network slice identifier that replaces the old S-NSSAI, and the allowed network slice information (i.e., Allowed NSSAI) containing the alternative S-NSSAI.

In addition, for each PDU session established for the old S-NSSAI, the AMF 150 may transmit, to the SMF, a message indicating that the network slice of the corresponding PDU session should be changed to the alternative S-NSSAI. The SMF 161 may transmit, based on the information received from the AMF 150, information indicating to transmit a new PDU session establishment request containing the alternative S-NSSAI and DNN (i.e., DNN of the existing PDU session) to the UE 110.

Based on the information that has been received from the SMF 161 in operation 301, the UE 110 may transmit a NAS message for a PDU session establishment request to the AMF 150 through the RAN 120 in operation 302.

The NAS message may include at least one of the following pieces of information:
- S-NSSAI: Alternative S-NSSAI information received from the SMF 161 in operation 301
- Additional S-NSSAI: Network slice identifier information (i.e., old S-NSSAI) replaced by the S-NSSAI (i.e., alternative S-NSSAI)
- Old PDU session ID: PDU session ID included in the information received from the SMF 161 in operation 301, and this is information capable of identifying a PDU session established in the old S-NSSAI.
- DNN: Name information for a data network (DN)
- PDU session ID: PDU session identifier generated by the UE 110
- Request type: Type of PDU session establishment request
- N1 SM container: Information transmitted to the SMF, and PDU Session Establishment Request message may be included therein.

The NAS message may include a PDU session ID, Requested PDU Session Type, a Requested SSC mode, 5GSM capability, etc.

Based on the S-NSSAI (i.e., alternative S-NSSAI) and DNN included in the information that has been received in operation 302, the AMF 150 may select the SMF 162 in operation 303.

The AMF 150 may know the previous S-NSSAI information (i.e., old S-NSSAI) that has been replaced by the S-NSSAI (i.e., alternative S-NSSAI) included in the information that has been received in operation 302.

Specifically, in case that the AMF 150 has transmitted, to the UE 110 in operation 301, information indicating that the alternative S-NSSAI is a network slice identifier that replaces the old S-NSSAI and has received, from the UE 110 in operation 302, the same S-NSSAI as the alternative S-NSSAI that replaces the old S-NSSAI and has been transmitted to the UE 110 in operation 301, the AMF 150 may know that the old S-NSSAI corresponds to a network slice having been replaced by another network slice.

Alternatively, when the message transmitted by the UE 110 in operation 302 includes additional S-NSSAI or old PDU session ID, the AMF 150 may identify the old S-NSSAI, based on the message. When the message transmitted by the UE 110 in operation 302 includes the old PDU session ID, the AMF may determine the S-NSSAI for the old PDU session ID, as the old S-NSSAI.

The AMF 150 may include at least one of the following pieces of information in the message transmitted to the SMF 162:
- SUPI: UE identifier information
- DNN: DNN included in the message that has been received in operation 302. When the AMF 150 receives a new DNN from the AM PCF, the corresponding DNN may be included.
- S-NSSAI: S-NSSAI included in the message that has been received in operation 302.
- Additional S-NSSAI: When the AMF 150 determines that the S-NSSAI included in the information that has been received in operation 302 is a network slice identifier that replaces the old S-NSSAI, the AMF 150 may include, in the message transmitted to the SMF 162, the additional S-NSSAI (i.e., network slice identifier information replaced by the S-NSSAI) along with the S-NSSAI (i.e., alternative S-NSSAI) received in operation 302.
- PDU session ID: PDU session ID included in the message received in operation 302
- Old PDU session ID: old PDU session ID included in the message received in operation 302
- AMF ID: AMF identifier
- Request Type, N1 SM container (PDU Session Establishment Request): Request Type and N1 SM Container included in the message that has been received in operation 302
- PCF ID, Same PCF Selection Indication: In case that the PCF Selection Assistance Info received from the UDM 153 in operation 300 includes the S-NSSAI and DNN corresponding to the Additional S-NSSAI and DNN received in operation 302, the AMF 150 may include one or more of the PCF ID and the Same PCF Selection Indication in the message transmitted to the SMF in operation 303. The PCF ID included in the message may be an identifier (PCF ID) corresponding to the PCF selected as the AM PCF in operation 300, or the PCF ID included in the UE Context in SMF Data received from the UDM 153 in operation 300.

When the message received in operation 303 includes the additional S-NSSAI along with the S-NSSAI or includes the old PDU session ID, the SMF 162 may, based on this, identify the identifier information (i.e., old S-NSSAI) of the network slice that is replaced by the S-NSSAI included in the message that has been received in operation 304a.

The SMF 162 may perform PCF selection. When the PCF ID is received in operation 303, the SMF 162 selects the PCF corresponding to the PCF ID. Otherwise, the SMF 162 may select the PCF by considering the SUPI, DNN, or S-NSSAI.

Operation 4b. The SMF may transmit a message requesting SM policy creation to the selected PCF 180. The message may contain one or more of the following pieces of information:
- SUPI: UE identifier information
- DNN: DNN received in operation 303
- PDU session ID: PDU session ID received in operation 303
- Old PDU session ID: old PDU session ID received in operation 303
- S-NSSAI: S-NSSAI received in operation 303
- Additional S-NSSAI: This indicates the identifier information of the network slice being replaced by the S-NSSAI, and may be the additional S-NSSAI received in operation 303.

In operation 305, the PCF 180 may transmit, to the UDR 250, a message for identifying whether there is a pre-selected PCF for the SUPI, DNN, and additional S-NSSAI which are included in the message that has been received in operation 304, or for the SUPI, DNN, additional S-NSSAI, and old PDU session ID (e.g., identifying whether there is UE Context in SMF Data corresponding thereto). The message 305 transmitted by the PCF 180 to the UDR 250 may include one or more pieces of the information as follows.
- Data Set: Data set information representing UE subscription
- Data Subset: Data Subset representing UE Context in SMF Data
- Data key: SUPI received in operation 304b
- Data Subkey: DNN, Additional S-NSSAI, Old PDU Session ID received in operation 304b

When the PCF information (i.e., PCF ID (or PCF address), PCF instance ID, or PCF Set ID) corresponding to the information that has been received in operation 305 is not stored in the UDR 250, the UDR 250 may not include the PCF information in a response message transmitted to the PCF 180 in operation 306.

When the PCF information is included in the message that has been received by the PCF from the UDR 250 in operation 306, operations 307 to 309 may be omitted and operation 310 may be performed.

When the PCF information is not included in the message that has been received by the PCF from the UDR 250 in operation 306, operation 307 may be performed.

In operation 307, the PCF 180 may request, from the UDR 250, at least one of the additional S-NSSAI and DNN that have been received in operation 304b and/or policy information for the S-NSSAI and DNN. That is, the PCF 180 may request either policy information for an existing network slice or policy information for a new network slice, or may request both.

The message 307 transmitted to the UDR 250 may include the SUPI, the DNN, the S-NSSAI, and/or the SUPI, the DNN, and the additional S-NSSAI.

In operation 308, the UDR 250 may include, in the response message transmitted to the PCF 180, at least one of the data usage monitoring-related information and the remaining allowable data usage-related information for the SUPI, DNN, and S-NSSAI (or SUPI, DNN, and additional S-NSSAI) contained in the information that has been received in operation 307.

In operation 309, the PCF 180 may determine a policy (e.g., PCC rule, etc.) for a PDU session. Here, the PCF 180 may utilize policy information determined for the additional S-NSSAI and DNN or for the additional S-NSSAI, DNN, and old PDU session ID, based on the information that has been received in operation 304b.

The PCF 180 may also determine a monitoring-related policy for the PDU session. Here, the PCF 180 may use the information that has been received in operation 308 to determine the monitoring-related policy.

In case that the PCF information (i.e., PCF addresses, PCF instance ID, or PCF set ID) is included in the information that has been received from the UDR 250 in operation 306, the PCF 180 may include, in the message transmitted to the SMF 162, information indicating redirection along with the corresponding PCF information in operation 310.

When the information that has been received in operation 310 includes PCF information to be redirected, the SMF 162 may select the corresponding PCF and perform the procedure again from operation 304b.

When the PCF 180 has determined the policy for the PDU session in operation 309, the PCF 180 may include the determined policy, i.e., PCC rule, monitoring-related policy information, PCR trigger information, etc., in the message 310 transmitted to the SMF 162.

In operation 311, the remaining PDU session establishment procedures may be performed. Examples of the remaining procedures may include user plane (UP) resource configuration, resource configuration result notification, or data communication through the configured UP resource.

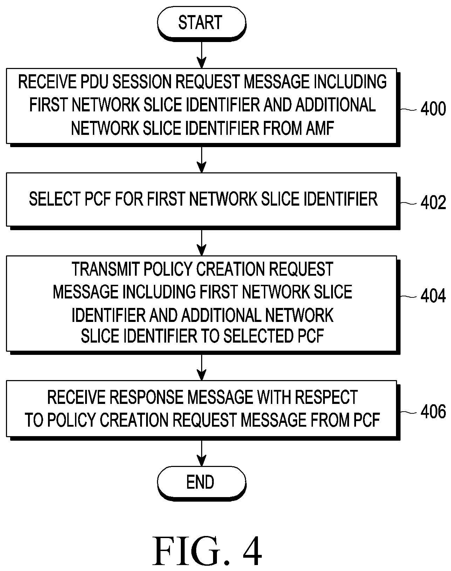

FIG. 4 illustrates a method for supporting the establishment of a PDU session of a network slice by an SMF in a communication network according to the disclosure.

The SMF may receive a PDU session request message including a first network slice identifier and an additional network slice identifier from an AMF (operations 400, 203, and 303). The additional network slice identifier (S-NSSAI) may be an identifier of a network slice replaced by the first network slice identifier (S-NSSAI). The PDU session request message may further include, in addition to the network slice identifiers, at least one of the SUPI, DNN, PDU session ID, old PDU session ID, AMF ID, Request type, N1 SM container, PCF ID, and Same PCF selection Indication. Optionally, the SMF may transmit a PCF ID for the first network slice identifier to a BSF or UDR and store the PCF ID in the BSF or UDR (operation 200). Optionally, the SMF may transmit the PCF ID for the first network slice identifier to the UDM and store the PCF ID in the UE Context in SMF Data of the UDM (operation 300).

The SMF may select a policy control function (PCF) for the first network slice identifier (operations 402, 204a, and 304a). When the PDU session request message includes a PCF ID, the SMF may select the PCF corresponding to the PCF ID, and when the PDU session request message does not include a PCF ID, the SMF may select the PCF, based on the first network slice identifier. The SMF may select the PCF, based on the SUP and the DNN in addition to the first network slice identifier.

The SMF may transmit a policy creation request message including the first network slice identifier and the additional network slice identifier to the selected PCF (operations 404, 204b, and 304b).

The SMF may receive a response message with respect to the policy creation request message from the PCF (operations 406, 210, and 310).

The SMF may support a PDU session creation procedure for the first network slice identifier by responding to the PDU session request message by using the response message. In particular, since the policy information included in the response message is policy information related to the existing PDU session obtained based on the additional network slice identifier, the overhead of newly performing session-related policies may be reduced, and the problem of service continuity not being guaranteed due to policy changes may be avoided.

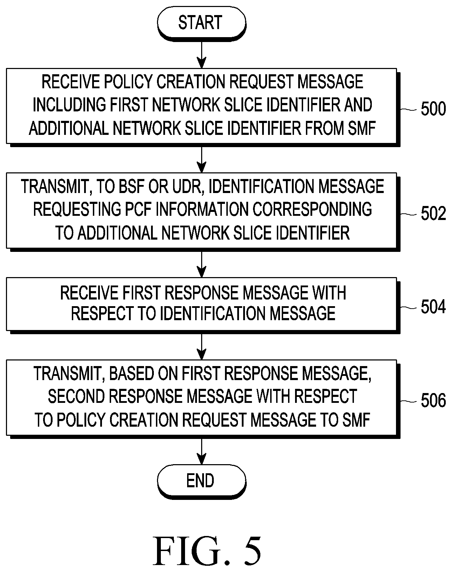

FIG. 5 illustrates a method for supporting the establishment of a PDU session of a network slice by a PCF in a communication network according to the disclosure.

The PCF may receive a policy creation request message including a first network slice identifier and an additional network slice identifier from an SMF (operations 500, 204b, and 304b). The additional network slice identifier (S-NSSAI) may be an identifier of a network slice replaced by the first network slice identifier (S-NSSAI). The policy creation request message may further include at least one of the SUPI, DNN, PDU session ID, and old PDU session ID in addition to the network slice identifiers.

The PCF may transmit, to the BSF or UDR, an identification message requesting PCF information corresponding to the additional network slice identifier (operations 502, 205a, 206a, and 305). The identification message transmitted by the PCF to the UDR may be a message requesting UE Context in SMF Data corresponding to the additional network slice identifier (operation 305).

The PCF may receive a first response message with respect to the identification message (operations 504, 205b, 206b, and 306).

When the received first response message does not include the PCF information, the PCF may transmit, to the UDR, a message requesting at least one of policy information for the first network slice identifier or policy information for the additional network slice identifier (operations 207 and 307). The PCF may receive a response message containing at least one of policy information for the first network slice identifier or policy information for the additional network slice identifier (operations 208 and 308).

The PCF may, based on the first response message, transmit a second response message with respect to the policy creation request message to the SMF (operations 506, 210, and 310). When the received first response message includes the PCF information, the second response message may include information indicating redirection to the PCF corresponding to the PCF information.

The PCF may support the PDU session creation procedure for the first network slice identifier by transmitting, to the SMF, the second response message in response to the policy creation request message. In particular, since the policy information included in the second response message is policy information related to the existing PDU session obtained based on the additional network slice identifier, the overhead of newly performing a session-related policy may be reduced, and the problem of service continuity not being guaranteed due to policy changes may be avoided.

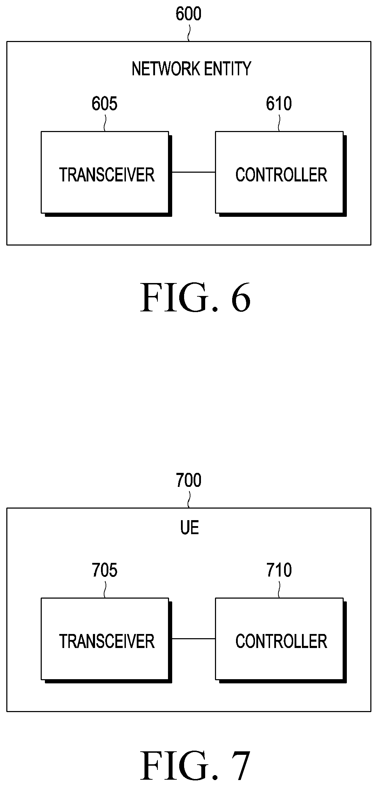

FIG. 6 illustrates a device configuration of a network entity according to the disclosure.

A network entity device illustrated in FIG. 6 may be a device of an entity (SMF, PCF, UDR, UDM, BSF, AMF, etc.) of a core network illustrated in the disclosure.

A network entity 600 may include a transceiver 605 that transmits and receives signals to and from other network entities or UEs, and a controller 610 that controls all operations of the network entity 600. In the disclosure, all methods performed by entities such as the PCF, SMF, UDR, and UDM may be understood to be performed under the control of the controller 610.

The controller 610 and the transceiver 605 need not necessarily be implemented as separate devices, and may of course be implemented as a single component in the form of a single chip.

The controller 610 may be implemented as a single processor within the network entity 600.

FIG. 7 illustrates a device configuration of a UE according to the disclosure.

A UE 700 illustrated in FIG. 7 may be a UE device illustrated in the disclosure.

The UE 700 may include a transceiver 705 that transmits and receives signals to and from other UEs or network entities, and a controller 710 that controls all operations of the UE 700. All operations or methods in the UE described above in the disclosure may be understood to be performed under the control of the controller 710.

The controller 710 and the transceiver 705 need not necessarily be implemented as separate devices, and may of course be implemented as a single component in the form of a single chip.

The controller 710 may be implemented as a single processor within the UE 700.

It should be noted that system configuration diagrams, method illustrations, and signal flowcharts illustrated in FIGS. 1 to 7 are not intended to limit the scope of protection of the disclosure. That is, all the constituent units or operation steps shown in FIGS. 1 to 7 should not be construed as essential elements for implementing the disclosure, and even when including only some of the elements, the disclosure may be implemented without impairing the true nature of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for supporting establishment of a protocol data unit (PDU) session of a network slice by a session management function (SMF) in a communication network, the method comprising:
receiving, from an access and mobility management function (AMF), a PDU session request message including a first network slice identifier and an additional network slice identifier, wherein the additional network slice identifier is an identifier of a network slice which is replaced by the first network slice identifier;
selecting a policy control function (PCF) for the first network slice identifier;
transmitting, to the selected PCF, a policy creation request message including the first network slice identifier and the additional network slice identifier; and
receiving, from the PCF, a response message to the policy creation request message.

2. The method of claim 1, further comprising:
transmitting, to a binding support function (BSF) or a unified data repository (UDR), a PCF ID for the first network slice identifier to store the PCF ID.

3. The method of claim 1, further comprising:
transmitting, to a unified data management (UDM), a PCF ID for the first network slice identifier and storing the PCF ID in UE Context in SMF Data of the UDM.

4. The method of claim 1, wherein selecting the PCF for the first network slice identifier comprises:
in case that the PDU session request message includes a PCF ID, selecting the PCF corresponding to the PCF ID; or
in case that the PDU session request message does not include a PCF ID, selecting the PCF, based on the first network slice identifier.

5. The method of claim 4, wherein the PDU session request message further comprises a subscription permanent identifier (SUPI) and a data network name (DNN), and
wherein selecting the PCF, based on the first network slice identifier, comprises selecting the PCF, based on the first network slice identifier, the SUPI, and the DNN.

6. A method for supporting establishment of a protocol data unit (PDU) session of a network slice by a policy control function (PCF) in a communication network, the method comprising:
receiving, from a session management function (SMF), a policy creation request message including a first network slice identifier and an additional network slice identifier, wherein the additional network slice identifier is an identifier of a network slice which is replaced by the first network slice identifier;
transmitting, to a binding support function (BSF) or a unified data repository (UDR), an identification message requesting PCF information corresponding to the additional network slice identifier;
receiving a first response message to the identification message; and
transmitting, to the SMF, a second response message to the policy creation request message based on the first response message.

7. The method of claim 6,
in case that the received first response message comprises the PCF information, the second response message includes information indicating redirection to the PCF corresponding to the PCF information.

8. The method of claim 6, further comprising:
in case that the received first response message does not include the PCF information, transmitting, to the UDR, a message requesting at least one of policy information for the first network slice identifier or policy information for the additional network slice identifier; and
receiving a response message including at least one of the policy information for the first network slice identifier or the policy information for the additional network slice identifier.

9. The method of claim 6, wherein transmitting, to the UDR, the identification message requesting PCF information corresponding to the additional network slice identifier comprises:
transmitting, to the UDR, the identification message requesting UE Context in SMF Data corresponding to the additional network slice identifier.

10. A session management function (SMF) entity supporting establishment of a protocol data unit (PDU) session of a network slice in a communication network, the SMF entity comprising:
a transceiver configured to receive, from an access and mobility management function (AMF), a PDU session request message including a first network slice identifier and an additional network slice identifier, wherein the additional network slice identifier is an identifier of a network slice which is replaced by the first network slice identifier; and
a processor configured to select a policy control function (PCF) for the first network slice identifier,
wherein the processor is configured to control the transceiver to:
transmit, to the selected PCF, a policy creation request message including the first network slice identifier and the additional network slice identifier; and
receive, from the PCF, a response message to the policy creation request message.

11. The SMF entity of claim 10, wherein the processor is configured to control the transceiver to transmit, to a binding support function (BSF) or a unified data repository (UDR), a PCF ID for the first network slice identifier.

12. The SMF entity of claim 10, wherein the processor is configured to transmit through the transceiver, to a unified data management (UDM), a PCF ID for the first network slice identifier and store the PCF ID in UE Context in SMF Data of the UDM.

13. The SMF entity of claim 10, wherein the processor is configured to:
in case that the PDU session request message includes a PCF ID, select the PCF corresponding to the PCF ID; or
in case that the PDU session request message does not include a PCF ID, select the PCF, based on the first network slice identifier.

14. The SMF entity of claim 13, wherein the PDU session request message further comprises a subscription permanent identifier (SUPI) and a data network name (DNN), and
wherein the processor is configured to select the PCF, based on the first network slice identifier, the SUPI, and the DNN.

15. A policy control function (PCF) entity supporting establishment of a protocol data unit (PDU) session of a network slice in a communication network, the PCF entity comprising:
a transceiver; and
a processor configured to, through the transceiver,
receive, from a session management function (SMF), a policy creation request message including a first network slice identifier and an additional network slice identifier, wherein the additional network slice identifier is an identifier of a network slice which is replaced by the first network slice identifier,
transmit, to a binding support function (BSF) or a unified data repository (UDR), an identification message requesting PCF information corresponding to the additional network slice identifier,
receive a first response message to the identification message, and
transmit, to the SMF, a second response message to the policy creation request message based on the first response message.
